# EUROPEAN PATENT APPLICATION

(11) **EP 2 011 404 A1**
(43) Date of publication of application: **07.01.2009**
(21) Application number: 07013085.1
(22) Date of filing: 04.07.2007
(51) Int. Cl.: A23J 3/04, A23J 3/22, A23J 3/26, A23K 1/00, A23K 1/10, A23K 1/18, A23L 1/00, A23P 1/12, B29C 47/00, B30B 11/24

(54) **Extruded food products and methods for making extruded food products**

(71) Applicant: Nestec S.A., 1800 Vevey (CH)
(72) Inventor: Bigeard, Fanny, 80 800 Hamelet (FR); Cartier, Catherine, 80 000 Amiens (FR); Lespagnol, Lucien Auguste, 80 800 Aubigny (FR); Pibarot, Patrick, 80 170 Guillaucourt (FR); Reynes, Pierre, 80 480 Pont De Metz (FR)
(74) Representative: Lock, Graham James

(57) **Abstract**

A method for producing an extruded food product comprising from about 25% to about 77% meat and vegetable protein by continuously introducing components of the food product to an extruder wherein the components include meat and vegetable protein; mixing the components to produce a mixture in the extruder; heating the mixture in the extruder to produce the food product; extruding the food product from the extruder through the extruder die; and cooling the food product. The product may further comprise plasticizers and be substantially free of cross-linking compounds. Generally, the product is a meat analog having a fibrous texturized appearance characteristic of meat.

## Description

### BACKGROUND OF THE INVENTION

### Field of the Invention

The present invention relates generally to extruded food products and particularly to extruded food products that are meat analog products made from meat and vegetable protein and the methods and extruders useful for producing such products.

### Description of Related Art

Various methods for producing many types of extruded products are known. For example, the food industry conventionally uses extrusion machines or extruders to produce textured edible products, e.g., food products made from a mixture of combinations of carbohydrates, protein, water, and fats. Flavoring and/or coloring agents can be added to the mixture. The mixture is typically kneaded to obtain an edible paste and the paste is subjected to successive heating, gelling and shaping to produce a food product.

Conventionally, the steps of heating, gelling and shaping a food product can all be carried out in an extruder having at least one screw which rotates within a barrel. The barrel has a means for heating the product and at one end, a die for extruding the product. Rotation of the screw kneads and compresses the mixture and forces it through the barrel. The mixture is heated in the barrel before being forced through the die.

EP1182937B1 and US6635301 disclose a method and apparatus for the manufacture of a meat analog. The method includes extruding a mixture of from about 40%-95% by weight of edible proteinaceous material. In an extruder the mixture is subjected to mechanical pressure and heat sufficient to convert the mixture into a hot viscous protein lava. The lava is extruded through a temperature controlled cooling die which cools and reduces the viscosity of the protein lava to obtain a cohesive, texturized slab or ribbon in which vapor-flashing is inhibited. The slab or ribbon is subjected to mechanical shredding in a hammer mill having a cage plate with a plurality of elongate discharge openings and a plurality of hammer bars hinged to discs attached to a rotating shaft, so as to obtain a plurality of extrudate shreds that resemble in consistency and texture, flaked or shredded meat.

WO03007729A1 discloses a method and apparatus for the continuous preparation of a retexturized food product. The document indicates that during kneading, the mixture expands due to the presence of water vapor contained in the mixture and this makes it impossible to obtain a product having uniformly orientated fibers. To address this problem, it is known to cool the food product locally after it leaves the die to obtain a homogenous fibrous product. However, cooling in this way causes blockage of the die, thereby varying pressure within the barrel of the extruder and this results in unpredictable efflux of the product from the die. In addition, incorrect orientation of fibers in the product takes place making it necessary to carry out further treatment of the product to re-orientate the fibers. The apparatus disclosed therein seeks to overcome these problems and includes an extruding machine having two co-rotary and co-penetrating screws. The extruding machine disclosed performs the following steps: supply and transport of ingredients, mixing and cooking steps, an intense kneading and plasticizing step to obtain a homogenous viscous, fluid mass; the flow rate of the mass is regulated at the outlet of the extruding machine; the mixture is transferred to an extrusion die; and the mixture is cooled gradually during the passage thereof into the extrusion die to a temperature below 120°C to obtain a retextured food product having a controlled and determined fibrous appearance.

WO04016097A1 discloses a shelf stable meat analog comprising glycerol and glucose. The product has a relative water activity of less than about 0.8 and comprises a proteinaceous material selected from defatted soy flour, soy meal, soy concentrate, cereal gluten and egg white powder. Edible binding and cross-linking compounds are used together with a humectant of glycerol and glucose. This document indicates that the technology of WO00/69276 does not provide a texturized protein product that is suitable for all desirable applications. For example, the document indicates that it is desirable to include visually authentic pieces of product as a direct inclusion in "dry" or semi-moist packeted pet foods (as compared to moist, canned pet foods), to reinforce the impression to the purchaser that the product contains "real" fish or chicken. The document states that the high moisture levels of the product disclosed in WO00/69276 would prevent their direct inclusion in such a dry or semi-moist packeted product, as the moisture content would limit the shelf life of the overall product, thereby reducing commercial feasibility.

WO04016097A1 discloses that a common way to reduce water activity while maintaining product texture is to incorporate one or more humectant materials. However, for the type of product disclosed in WO00/69276 it has been found that the common humectant systems are unsuitable. In addition, the incorporation of sugars tends to cause extruder blockages and product burning in a high-shear twin-screw extruder. Similarly, the use of a lower viscosity humectant resulted in an inability to produce an acceptable "striated" texture for the product. Furthermore, it is disclosed that other humectants, such as propylene glycol compromise the texture of the product when added at the levels necessary to extend the shelf-life of the product. In addition, it is disclosed that propylene glycol is unsuitable for a food product intended for felines because it is toxic and tends to produce a flavor taint that is undesirable.

As shown in the references above, current methods for producing meat analog products use complicated processes that produce product with undesirable fiber structure. Similarly, current methods are not applicable to all types of food products. There is, therefore, a need for novel extruded food products and methods for making such products, particularly meat analog products.

### SUMMARY OF THE INVENTION

It is, therefore, another object of the invention to provide methods for making new extruded food products.

It is another object of the present invention to provide new extruded food products.

It is a further object of the invention to provide new extruded food products in the form of meat analog products.

It is another object of the present invention to provide extruders useful for making new extruded food products.

These and other objects are achieved using methods for producing extruded food products comprising (1) continuously introducing components of a food product to an extruder wherein the components include meat and vegetable protein; (2) mixing the components to produce a mixture in the extruder; (2) heating the mixture in the extruder to produce the food product; (4) extruding the food product from the extruder through an extruder die; and (5) cooling the food product to produce an extruded food product that comprises from about 25% to about 77% meat and vegetable protein. The resulting product has the appearance of meat, e.g., a meat analog. In various embodiments, the components include one or more optional plasticizers and exclude substantially all cross-linking compounds. In one embodiment, the components include cross-linking compounds, with or without plasticizers. In one embodiment, the product is produced using a novel extruder.

Other and further objects, features, and advantages of the present invention will be readily apparent to those skilled in the art.

### BRIEF DESCRIPTION OF THE DRAWINGS

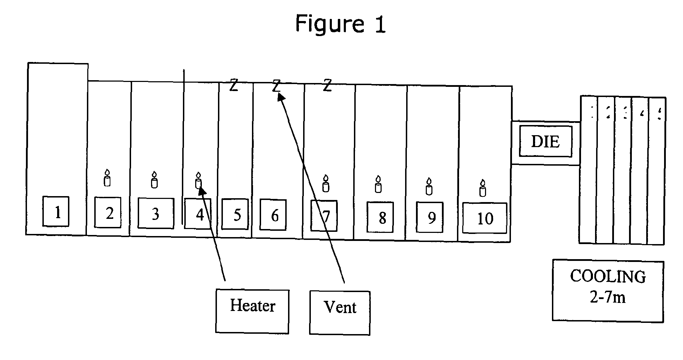

Figure 1 illustrates an extruder of the present invention.

### DETAILED DESCRIPTION OF THE INVENTION

### Definitions

The term "about" means plus or minus 20%, more preferably plus or minus 10%, even more preferably plus or minus 5%, most preferably plus or minus 2%.

The term "fibrous" means containing, consisting of, or resembling fibers of meat threads, filaments, or groups of filaments grouped into a continuous strand; wherein the strands can be easily separated.

The term "food product" means any food, feed, snack, food supplement, treat, meal substitute, or meal replacement, whether intended for a human or an animal. Animal food includes food or feed intended for any domesticated or wild species. In preferred embodiments, a food for an animal represents a nutritionally complete food or dietary composition. Examples of such animal foods include extruded pet foods such as foods for canines and felines, e.g., dogs and cats.

The term "meat" means meat and meat by-products including carcass, bones, skin, offal and muscle. Fresh meat is obtained directly from a slaughter house and is selected from poultry including chicken, turkey, duck and goose; fish including tuna, salmon, trout and cod; ovines including lamb and sheep; bovines including cow, calf and veal; and porcines including pig and wild pig.

The term "meat analog" means a product having a plurality of strands of interwoven fibers that are linearly arranged in cohesive, layered bundles. A "meat analog" product has a texture resembling the texture of meat. The texture is provided by cohesive, aligned fibers.

The term "meat by-products" means animal muscle protein or skeletal meats of one or more mammals, fish and/or poultry and includes tissue selected from one or more of heart, liver, lung, spleen, tongue and the like.

The term "water activity" means "relative water activity" and has this term's accepted meaning in the art, i.e., the proportional availability of the water molecules present to react relative to the availability of water molecules in pure liquid water.

The invention is not limited to the particular methodology, protocols, and reagents described herein because they may vary. Further, the terminology used herein is for the purpose of describing particular embodiments only and is not intended to limit the scope of the present invention. As used herein and in the appended claims, the singular forms "a," "an," and "the" include plural reference unless the context clearly dictates otherwise.

Unless defined otherwise, all technical and scientific terms and any acronyms used herein have the same meanings as commonly understood by one of ordinary skill in the art in the field of the invention. Although any methods and materials similar or equivalent to those described herein can be used in the practice of the present invention, the preferred methods, devices, and materials are described herein.

All patents, patent applications, and publications mentioned herein are incorporated herein by reference to the extent allowed by law for the purpose of describing and disclosing the compounds and methodologies reported therein that might be used with the present invention. However, nothing herein is to be construed as an admission that the invention is not entitled to antedate such disclosure by virtue of prior invention.

All percentages for weights expressed herein are by weight of the total food product unless specifically stated otherwise.

### The Invention

In one aspect, the invention provides methods for producing extruded food products comprising from about 25% to about 77% meat and vegetable protein. In one embodiment, the methods further comprise adding water. The methods comprise (1) continuously introducing components of the product to an extruder wherein the components comprise meat and vegetable protein; (2) mixing the components to produce a mixture in the extruder; (2) heating the mixture in the extruder to produce the product; (4) extruding the product from the extruder through the extruder die; and (5) cooling the product. In one embodiment, the method further comprises one or more plasticizers as an ingredient. In various embodiments, the components include one or more optional plasticizers and exclude substantially all cross-linking compounds. In one embodiment, the components include cross-linking compounds, with or without plasticizers. Advantageously, the product made using this method exhibits controlled flashing effect during extrusion. Further, the product exhibits a fibrous texturized appearance that resembles meat, i.e., the product is a meat analog. In addition, the method is stable and reproducible and has a high throughput. The extruder useful in the method comprises any extruder capable of producing extruded food products comprising from about 25% to about 77% meat and vegetable protein. In preferred embodiments, the extruder useful in the method comprises the extruder of the present invention.

In another aspect, the invention provides an extruder suitable for producing products comprising from about 25% to about 77% meat and vegetable protein. The extruder is also suitable for producing such products further comprising one or more plasticizers, one or more cross-linking compounds, substantially no cross-linking compounds, or combinations thereof. The extruder produces products that have a fibrous texturized appearance that resembles meat, i.e., a meat analog. A typical extruder has a plurality of barrels wherein the inside of each barrel can be subjected to a different temperature. IN a preferred embodiment, the extruder comprises a plurality of barrels having a length:diameter ratio of about 4. Preferably, the entire extruder has a length:diameter ratio of at least about 36 to at least about 48.

The extruder of the present invention comprises a higher length/diameter ratio that can generate proper thermal and mechanical energy and achieve proper mixing required to produce a product comprising from about 25% to about 77% meat and vegetable protein. A preferred extruder comprises a plurality of barrels having a length:diameter ratio of about 4. Preferably, the entire extruder has a length:diameter ratio of at least about 36 to at least about 48. Most preferably, the extruder comprises about 10 barrels. In one embodiment, the extruder comprises twin screws that are rotated around parallel axes within a plurality of barrels.

In one embodiment, the extruder comprises heaters positioned on the barrels of the extruder. During the process, the temperature of the barrels reaches at least about 150°C. This temperature is required to produce the desired texture. More preferably, the temperature of the barrels reaches about 160°C to about 180°C. The temperature inside each barrel of the extruder is adjusted depending on whether the product is a wet, semi moist, or dry pet food product.

In one embodiment, the die of the extruder defines a cooling section in the form of a tube having an internal cross sectional area of from about 3.5 cm² to about 4.5 cm², more preferably about 4 cm². Preferably, the internal cross section of the cooling section is circular. This circular cross section provides no "dead zones" that can exist in rectangular sections wherein the food product exiting the die may become trapped. In addition, preferably the internal R/L (radius / length) ratio of the cooling section is about 65 to about 75, more preferably about 70.

The cooling section has a plurality of sub-sections that are regulated by temperature and pressure conditions and these conditions have an effect on the food product. This effect produces the desired fibrous textures. During the process, the temperature of the barrels reaches at least about 150°C. This temperature is required to produce the desired texture. More preferably, the temperature of the barrels reaches about 160°C to about 180°C. The temperature inside each barrel of the extruder is adjusted depending on whether the product is a wet, semi moist, or dry pet food product.

The step of cooling of the food product takes place within the cooling section. Preferably, the cooling section of the die comprises 3 to 8 sub-sections and has a length of from about 2 to about 7 meters depending on whether the product is a wet, semi-moist or dry pet food product. In this regard, the cooling section of the die preferably comprises 3 to 5 sub-sections and has a length of from about 2 to about 4 meters for wet products; the cooling section of the die preferably comprises 5 to 8 sub-sections and has a length of from about 4 to about 7 meters for semi-moist products; and the cooling section of the die preferably comprises 3 to 8 sub-sections and has a length of from about 2 to about 7 meters for dry products.

Preferably, the temperature gradient of the cooling section depends on whether the product is a wet, semi-moist or dry product and is: Δmax○-105°C, Δmin=20°C for a wet product wherein ○ represents the temperature of the product at the first sub-section; Δmax○-50°C, Δmin=0°C for a semi-moist product; and Δmax○-80°C, Δmin=0°C for a dry product.

The product exits the die in a ribbon and can be cut without any additional shearing after the die exit.

For a dry application, after the product exits the die, it is preferably subjected to post cooling processing. In this regard, the product is subjected to a gas/electric dryer for about 5 to about 20 minutes. This provides a temperature of from about 110°C to about 130°C.

An extruder of the present invention is shown in Figure 1. The preferred locations for the heaters and vents are shown.

In various embodiments using the extruder and methods of the present invention, the extruder screws are rotated at a speed of rotation (rpm) of at least about 550, more preferably about 550 to about 1200. Advantageously, this speed produces excellent mixing and throughput of product. The throughput achieved is at least about 150 kg/h to at least about 350 kg/h. In an embodiment, the throughput is at least about 400 kg/h. Preferably, the extruder is vented between the ends of the extruder. Venting takes place between the ends of the extruder about equal distance from each end. Preferably, a ten barrel extruder is used and venting is carried out at about the sixth barrel of the extruder. Additional and/or alternative venting is carried out at about the fifth and/or seventh barrels of the extruder. Advantageously, venting allows water in the form of steam to be removed from the food product and allows pressure within the extruder to be lowered. Pressure is then built up between venting and the die of the extruder to force the product through the die. Preferably, no additional steam is introduced to the extruder. Advantageously, this has the result that no additional water is added to the product. Preferably, the pressure in the extruder reaches about 20 bar to about 90 bar. More preferably, the pressure equidistant from the ends of the extruder, inside about the fifth or sixth barrels of a ten barrel extruder is about one atmosphere. In addition, the pressure adjacent the extruder die in about the tenth barrel of a ten barrel extruder is about 20 bar to about 90 bar. Typically, heaters are positioned on the extruder barrels for heating the food product. Preferably, no steam is added during the extrusion. Optionally, the method includes venting the extruder to remove water, depending on the water content of the product. Preferably, the temperature in the extruder reaches at least about 130°C. More preferably the temperature in the extruder reaches about 130°C to about 200°C. Comparative tests have revealed that if the maximum temperature is below 130°C an inferior fibrous texture is achieved. Without wishing to be bound by theory, it is believed that the inferior texture is because gluten protein is not melted and does not align through the extruder die into a fibrous texture. The temperature inside each barrel of the extruder is adjusted depending on whether the product is a wet, semi-moist or dry pet food product and whether venting of the extruder is carried out.

In one embodiment, the method produces a wet food product. This embodiment comprises rotating the extruder screws at a speed of rotation (rpm) of from about 550 to about 700. Preferably, for production of a wet food the extruder is not vented. For production of a wet food, the temperature in the extruder reaches at least about 130°C to about 160°C. More preferably, in the second barrel of the extruder the product is heated to about 20°C and in the four barrels adjacent the die, the product is heated to at least about 130°C. Most preferably, in a ten barrel extruder the product is heated to about 20°C in the second barrel and in the seventh to tenth barrels the product is heated to about 130°C. Preferably, for production of a wet food the pressure inside the extruder adjacent the die is maintained at about 25 to about 75 bar. In a preferred embodiment, the wet food product is a wet pet food product.

In one embodiment, the method produces a semi-moist food product. This embodiment comprises rotating the screws of the extruder at a speed of rotation (rpm) of from about 850 to about 1200. Preferably, for production of a semi-moist food the extruder is vented. Advantageously, this removes water from the product. Preferably, for production of a semi-moist food the temperature in the extruder reaches at least about 150°C to about 200°C. More preferably, in the second barrel of the extruder the product is heated to about 20°C, in about the fourth barrel the product is heated to about 130°C, it is vented to reduce the temperature, and in the four barrels adjacent the die, the product is heated to at least about 150°C. Most preferably, in a ten barrel extruder the product is heated to about 20°C in the second barrel, heated to 130°C in the fourth barrel, maintained at 130°C in the fifth barrel, vented to reduce the temperature in the sixth barrel to about 110°C and in the seventh to tenth barrels the product is heated to about 150°C. Preferably, for production of a semi-moist food the pressure inside the extruder adjacent the die is maintained at about 30 to about 60 bar. In a preferred embodiment, the semi-moist food product is a semi-moist pet food product.

In one embodiment, the method produces a dry food. This embodiment comprises rotating the screws of the extruder at a speed of rotation (rpm) of from about 850 to about 1200. Preferably, for production of a dry food the extruder is vented. Advantageously, this removes water from the product. Preferably, for production of a dry food the temperature in the extruder reaches at least about 150°C to about 200°C. More preferably, in an embodiment of the method where no venting takes place, in the second barrel of the extruder the product is heated to about 20°C, and in the four barrels adjacent the die, the product is heated to at least about 200°C. Most preferably, in a ten barrel extruder the product is heated to about 20°C in the second barrel, and in the seventh to tenth barrels the product is heated to about 200°C. Alternatively, in an embodiment of the method wherein venting takes place, in the second barrel of the extruder the product is heated to about 20°C, in about the fourth barrel the product is heated to about 150°C, it is vented to reduce the temperature, and in the four barrels adjacent the die, the product is heated to at least about 200°C. Most preferably, in a ten barrel extruder the product is heated to about 20°C in the second barrel, heated to 150°C in the fourth barrel, maintained at 150°C in the fifth barrel, vented to reduce the temperature in the sixth barrel to about 110°C and in the seventh to tenth barrels the product is heated to about 200°C. Preferably, for production of a dry food the pressure inside the extruder adjacent the die is maintained at about 60 to about 90 bar. In a preferred embodiment, the dry food product is a dry pet food product.

In one aspect, the present invention provides an extruded food product comprising from about 25% to about 77% meat and vegetable protein. In one embodiment, the product further comprises added water. In various embodiments, the components include one or more optional plasticizers and exclude substantially all cross-linking compounds. In one embodiment, the components include cross-linking compounds, with or without plasticizers. The product has a fibrous texturized appearance that resembles meat, i.e., a meat analog. Preferably, the water activity of the product is from about 0.3 to about 1.0 depending on whether the product is a wet, semi-moist, or dry product. In one embodiment, the water content of the product is from about 4% to about 90% depending on whether the product is a wet, semi- moist, or dry food product. Preferably, the meat is a low fat meat.

Plasticizers useful in the present invention include polyols such as glycerol, propylene glycol or sorbitol, animal or vegetable fats and derivatives, mono, di or triglycerides and derivatives and hydrolysed protein mixtures and derivatives. Many such plasticizers are known to skilled artisans. In one embodiment, the plasticize is glucose and in another the plasticizer is a combination of glycerol and glucose. Cross-linking compounds to be avoided when omitted or to be added when used are known to skilled artisans. Generally, such compounds are all oxidative or reducing compounds that can disrupt disulfur bounds, e.g., sulfur, cystein, ascorbic acid, calcium oxide, sodium bisulfite or glutation.

In one embodiment, the product is a pet food. The pet food can be formulated for dogs, cats, or other pets. In another, the product is for human consumption. Such product requires meat suitable for human consumption. In various embodiments, the food product is a wet, semi-moist, or dry product.

In other aspects, the invention provides the product produced using the method of the invention and the product produced using the extruder of the invention.

### EXAMPLES

This invention can be further illustrated by the following examples although it will be understood that these examples are included merely for purposes of illustration and are not intended to limit the scope of the invention unless otherwise specifically indicated.

### Example 1

An extruder of the invention can be used to produce a wet pet food product according to the invention. An example of a wet pet food product produced according to the invention comprises about 30% to about 90% water and the water activity of the product is about 0.8 to about 1.0. The wet pet food comprises about 25% to about 75% meat and the meat includes wet meat (fresh and/or frozen meat) and/ or meat meal (dehydrated meat). In this example, the product includes about 25% to about 75% wet meat and the remainder of the meat content is provided by meat meal. The wet pet food comprises about 15% to about 35% vegetable protein in the form of wheat gluten. There is about 5%-10% starch naturally present in the gluten. In view of this, the product has about 3% starch content. This example of a pet food can be formulated for a main meal and therefore it is nutritionally complete for providing a balanced diet - it includes vitamins and minerals at the recommended daily levels. Alternatively, the pet food is formulated for a treat and is not nutritionally balanced and does not include vitamins or minerals.

### Example 2

An example of a pet food product according to the invention is a semi-moist pet food that comprises about 14% to about 30% water and the water activity is about 0.3 to about 0.8.
This example comprises about 25% to about 55% meat including about 25% to about 36% wet meat and the remainder of the meat content is provided by meat meal. About 15% to about 35% vegetable protein is included in the form of wheat gluten. There is about 5%-10% starch naturally present in the gluten. In view of this, the product has about 3% starch content. About 5% to about 50% plasticizer is included. An embodiment of this pet food has soft meaty chunks that are provided by an increased level of plasticizer. The plasticizer is glycerol. This example of the pet food can be formulated for a main meal and therefore it is nutritionally complete for providing a balanced diet, i.e., it includes vitamins and minerals at the recommended daily levels. Alternatively, the pet food is formulated for a treat and is not nutritionally balanced and does not include vitamins or minerals.

### Example 3

An example of a pet food product according to the invention is a dry pet food that comprises a water content of from about 4% to about 14% and the water activity is about 0.3 to about 0.7. This example comprises about 25% to about 77% meat including about 25% to about 75% wet meat and the remainder of the meat content is provided by meat meal. About 15% to about 35% vegetable protein is included in the form of wheat gluten. There is about 5%-10% starch naturally present in the gluten. In view of this, the product has about 3% starch content. About 0% to about 50% plasticizer including glycerol and glucose is included and preferably the ratio of glycerol:glucose is about 70 to about 100:about 30 to about 0. This example of the pet food can be formulated for a main meal and therefore is nutritionally complete for providing a balanced diet. Alternatively, the pet food is formulated for a treat and is not nutritionally balanced and does not include vitamins.

In the specification, there have been disclosed typical preferred embodiments of the invention and, although specific terms are employed, they are used in a generic and descriptive sense only and not for purposes of limitation, the scope of the invention being set forth in the following claims. Obviously many modifications and variations of the present invention are possible in light of the above teachings. It is therefore to be understood that within the scope of the appended claims the invention may be practiced otherwise than as specifically described.

## Claims

1. A method for producing an extruded food product comprising from about 25% to about 77% meat and vegetable protein comprising:
continuously introducing components of the food product to an extruder wherein the components include meat and vegetable protein;
mixing the components to produce a mixture in the extruder;
heating the mixture in the extruder to produce the food product;
extruding the food product from the extruder through the extruder die; and
cooling the food product.

2. The method of claim 1 wherein the extruder comprises twin screws that are rotated around parallel axes within a plurality of barrels.

3. The method of claim 2, or any preceding claim, wherein the extruder comprises about 8 barrels to about 14 barrels.

4. The method of claim 3, or any preceding claim, wherein each barrel has a length:diameter ratio of about 4.

5. The method of claim 4, or any preceding claim, wherein the entire extruder has a length:diameter ratio of from about 36 to about 48.

6. The method of claim 1, or any preceding claim, wherein the screws of the extruder are rotated at a speed of rotation (rpm) of at least about 550.

7. The method of claim 1, or any preceding claim, wherein the throughput achieved is at least about 150 kg/h to at least about 400 kg/h.

8. The method of claim 1, or any preceding claim, further comprising venting the extruder between the ends of the extruder about equal distance from each end.

9. The method of claim 1, or any preceding claim, wherein no additional steam is introduced to the extruder.

10. The method of claim 1, or any preceding claim, wherein the pressure in the extruder reaches about 20 bar to about 90 bar.

11. The method of claim 1, or any preceding claim, wherein heaters are positioned on the extruder barrels for heating the food product and the heaters are inside the second to fourth barrels and inside the four barrels adjacent the die of the extruder.

12. The method of claim 1, or any preceding claim, wherein the temperature in the extruder reaches at least about 130°C.

13. The method of claim 1, or any preceding claim, wherein the barrels of the screws are rotated at a speed of rotation (rpm) of from about 550 to about 700.

14. The method of claim 13 wherein the extruder is not vented.

15. The method of claim 13, or any one of claims 13 to 14, wherein in the second barrel of the extruder the product is heated to about 20°C and in the four barrels adjacent the die, the product is heated to at least about 130°C.

16. The method of claim 13, or any one of claims 13 to 15, wherein the pressure on the extruder barrel adjacent the die is maintained at about 25 to about 75 bar.

17. The method of claim 1 wherein the method comprises rotating the barrels of the extruder at a speed of rotation (rpm) of from about 850 to about 1200.

18. The method of claim 17 wherein venting of the extruder is carried out.

19. The method of claim 17, or any one of claims 17 to 18, wherein in the second barrel of the extruder the product is heated to about 20°C, in about the fourth barrel the product is heated to about 130°C, it is vented to reduce the temperature, and in the four barrels adjacent the die, the product is heated to at least about 150°C.

20. The method of claim 1, or any one of claims 17 to 19, wherein the pressure inside the extruder adjacent the die is maintained at about 30 to about 60 bar.

21. The method of claim 1 wherein the method comprises rotating the screws of the extruder at a speed of rotation (rpm) of from about 850 to about 1200.

22. The method of claim 21 wherein venting of the extruder is carried out.

23. The method of claim 21, or any one of claims 21 to 22, wherein in the second barrel of the extruder the product is heated to about 20°C, and in the four barrels adjacent the die, the product is heated to at least about 200°C.

24. The method of claim 21, or any one of claims 21 to 23, wherein in the second barrel of the extruder the product is heated to about 20°C, in about the fourth barrel the product is heated to about 150°C, it is vented to reduce the temperature, and in the four barrels adjacent the die, the product is heated to at least about 200°C.

25. The method of claim 21, or any one of claims 21 to 24, wherein the pressure inside the extruder adjacent the die is maintained at about 60 to about 90 bar.

26. The method of claim 1, or any preceding claim, wherein the die of the extruder defines a cooling section in the form of a tube having an internal cross sectional area of from about 3.5 cm² to about 4.5 cm².

27. The method of claim 26 wherein the internal cross section of the cooling section is circular and the internal R/L (radius / length) ratio of the cooling section is about 65 to about 75.

28. The method of claim 26, or any one of claims 26 to 27, wherein the cooling section has a plurality of sub-sections that are regulated by temperature and pressure conditions and these conditions have an effect on the food product, providing desired fibrous textures.

29. The method of claim 1, or any preceding claim, wherein cooling of the product is carried out using a temperature gradient determined by the glycerol:water ratio of the product wherein the glycerol ratio is from about 10 to about 20 and the water ration is from about 90 to about 80.

30. The method of claim 26, or any preceding claim, wherein the step of cooling of the food product takes place within the cooling section and the cooling section of the die comprises 3 to 8 sub-sections and has a length of from about 2 to about 7 meters.

31. The method of claim 30 wherein the cooling section of the die comprises 3 to 5 sub-sections and has a length of from about 2 to about 4 meters for production of wet products.

32. The method of claim 30 wherein the cooling section of the die comprises 5 to 8 sub-sections and has a length of from about 4 to about 7 meters for production of semi-moist products

33. The method of claim 30 wherein the cooling section of the die comprises 3 to 8 sub-sections and has a length of from about 2 to about 7 meters for production of dry products.

34. The method of claim 1, or any preceding claim, wherein after a dry food product is subjected to a gas/electric dryer for about 5 to about 20 minutes providing a temperature of from about 110°C to about 130°C after the product exits the die.

35. The method of claim 1, or any preceding claim, further comprising adding water.

36. An extruder suitable for producing a food product comprising from about 25% to about 77% meat and vegetable protein.

37. The extruder of claim 36 comprising about 8 to about 14 barrels and each barrel has a length:diameter ratio of about 4 and the entire extruder has a length:diameter ratio of at least about 36 to at least about 48.

38. The extruder of claim 36, or any one of claims 36 to 37, comprising a plurality of barrels wherein the diameter of each screw is about 53 mm.

39. The extruder of claim 36, or any one of claims 36 to 38, wherein the extruder comprises twin screws that are rotated around parallel axes within a plurality of barrels.

40. The extruder of claim 36, or any one of claims 36 to 39, wherein vents are positioned between the ends of the extruder about equal distance from each end.

41. The extruder of claim 36, or any one of claims 36 to 40, comprising ten barrels and comprising vents at about the sixth barrel of the extruder and wherein additional and/or alternative vents are located at about the fifth and/or seventh barrels of the extruder.

42. The extruder of claim 36, or any one of claims 36 to 41, wherein the extruder comprises heaters positioned on the second to fourth barrels adjacent the end of the extruder distal from the die and inside the four barrels adjacent the die of the extruder.

43. The extruder of claim 36, or any one of claims 36 to 42, wherein the die of the extruder defines a cooling section in the form of a tube having an internal cross sectional area of from about 3.5 cm² to about 4.5 cm².

44. The extruder of claim 43 wherein the internal cross section of the cooling section is circular and the internal R/L (radius / length) ratio of the cooling section is about 65 to about 75.

45. The extruder of claim 43, or any one of claims 43 to 44, wherein cooling section has a plurality of sub-sections that are capable of being regulated by temperature and pressure conditions.

46. The extruder of claim 43, or any one of claims 43 to 45, wherein the cooling section of the die comprises 3 to 8 sub-sections and has a length of from about 2 to about 7 meters.

47. An extruded food product comprising from about 25% to about 77% meat vegetable protein.

48. The product of claim 47 further comprising one or more plasticizers.

49. The product of claim 47, or any one of claims 47 to 48, comprising substantially no cross-linking compounds.

50. The product of claim 47, or any one of claims 47 to 49, wherein the product is a pet food product.

51. The product of claim 50 wherein the pet food product is formulated for a canine or a feline.

52. The product of claim 47, , or any one of claims 47 to 51, wherein water activity of the product is about 0.3 to about 1.0.

53. The product of claim 47, or any one of claims 47 to 52, wherein the water content of the product is from about 4% to about 90%.

54. The product of claim 47, or any one of claims 47 to 53, wherein the product includes about 25% to about 75% wet meat and the remainder of the meat content is provided by meat meal.

55. The product of claim 47, or any one of claims 47 to 54, wherein the vegetable protein content of the product is about 15% to about 35%.

56. The product of claim 47, or any one of claims 47 to 55, wherein the plasticizer content is from about 0% to about 50%.

57. The product of claim 56 wherein the plasticizer is glycerol.

58. The product of claim 47, or any one of claims 47 to 57, wherein the product comprises about 30% to about 90% water.

59. The product of claim 58 wherein the water activity of the product is about 0.8 to about 1.0.

60. The product of claim 58, or any one of claims 58 to 59, wherein the product comprises about 25% to about 77% meat.

61. The product of claim 60 wherein the product comprises about 25% to about 75% wet meat and the remainder of the meat content is provided by meat meal.

62. The product of claim 47 wherein the product comprises about 14% to about 30% water.

63. The product of claim 62 wherein the water activity of the product is about 0.3 to about 0.8.

64. The product of claim 62, or any one of claims 62 to 63, wherein the product comprises about 25% to about 55% meat.

65. The product of claim 64 wherein the product comprises about 25% to about 36% wet meat and the remainder of the meat content is provided by meat meal.

66. The product of claim 62, or any one of claims 62 to 65, wherein the product comprises about 5% to about 50% plasticizer.

67. The product of claim 66 wherein the plasticizer includes glycerol.

68. The product of claim 47 wherein the product comprises about 4% to about 14% water.

69. The product of claim 68 wherein the water activity of the product is about 0.3 to about 0.7.

70. The product of claim 68, or any one of claims 68 to 69, wherein the product comprises about 25% to about 77% meat.

71. The product of claim 70 wherein product includes about 25% to about 75% wet meat and the remainder of the meat content is provided by meat meal.

72. The product of claim 56, or any one of claims 48 to 71, wherein the plasticizer is a combination of glycerol and glucose.

73. The product of claim 66 wherein the plasticizer is a combination of glycerol and glucose.
